# FASCICULE DE BREVET EUROPEEN

(11) **EP 1 111 742 B1**
(45) Date de publication et mention de la délivrance du brevet: **15.06.2011**
(21) Numéro de dépôt: 00403622.4
(22) Date de dépôt: 21.12.2000
(51) Int. Cl.: H01S 3/067

(54) **Amplificateur optique en bandes C et L**
L-und C- Band optischer Verstärker
L-and C-band optical amplifier

(30) Priorité: 23.12.1999 FR 9916337
(43) Date de publication de la demande: 27.06.2001
(73) Titulaire: Alcatel Lucent, 75008 Paris (FR)
(72) Inventeur: Bayart, Dominique, 92140 Clamart (FR)
(74) Mandataire: Sciaux, Edmond

(56) Documents cités:
- EP-A- 0 883 218
- PATENT ABSTRACTS OF JAPAN vol. 1998, no. 04, 31 mars 1998 (1998-03-31) & JP 09 312432 A (HITACHI CABLE LTD), 2 décembre 1997 (1997-12-02)
- SUGAYA Y ET AL: "In-service-upgradable and wide-dynamic-range split-band optical fibre amplifier for high-capacity broadband WDM transmission systems" ELECTRONICS LETTERS, 5 AUG. 1999, IEE, UK, vol. 35, no. 16, pages 1361-1362, XP002146494 ISSN: 0013-5194
- YAMASHITA ET AL: "Er3+ doped fibre pre-amplifier with subsidiary EDF for application in WDM systems using two separate wavelength bands of 1.53 and 1.55 micro-metre", ELECTRONICS LETTERS, vol. 32, no. 18, 29 August 1996 (1996-08-29), pages 1690-1691,

## Description

La présente invention concerne le domaine des transmissions par fibre optique, et plus particulièrement les amplificateurs en bandes C et L utilisés pour les systèmes de transmission sous-marins.

On distingue diverses bandes dans les systèmes de transmission à fibre optique, et notamment dans les systèmes de transmission terrestres. On appelle "bande C" la plage de longueur d'onde entre 1529 et 1565, et "bande L" la plage de longueur d'onde entre 1569 et 1603 nm.

M. X. Ma et autres, 765 Gb/s over 2,000 km Transmission using C- and L-band Erbium Doped Fiber Amplifiers, OFC'99, post-deadline paper PD16-1 à 3, décrit une expérience de transmission en bandes C et L pour des systèmes de transmission sous-marins, avec des tronçons de 43,5 km et des amplificateurs optiques. Chaque amplificateur est constitué d'un séparateur de bande, de branches d'amplification distinctes pour les bandes C et L et d'un combineur de bandes.

Y. Sun et autres, A gain-flattened ultra wide band EDFA for high capacity WDM optical communications systems, ECOC'98, pp. 53-54 propose, pour un système de transmission à fibre optique terrestre, un amplificateur optique très large bande, pour l'amplification de signaux en bandes C et L. L'amplificateur comprend un premier étage d'amplification avec une fibre dans laquelle les signaux des bandes C et L sont amplifiés conjointement par une lumière contra-propagative à 980 nm. Les signaux des bandes C et L sont ensuite séparés, et amplifiés séparément dans deux branches distinctes; dans chaque branche sont prévus trois étages d'amplification, pour compenser les effets de la fibre DCF (fibre de compensation de dispersion), pour compenser les pertes des filtres d'égalisation de gain et pour amplifier les signaux à la puissance de sortie. Pour une puissance d'entrée de 0 dBm, le gain total de l'amplificateur est de 25 dB. Environ un quart de la puissance créée en bande C dans l'amplificateur est créé dans le premier étage d'amplification, et les trois quarts sont créés dans la branche pour les signaux de bande C du second étage.

Le résumé du document JP-09 312 432 décrit un amplificateurs optique comportant une fibre dopée. Le signal entrant est un signal WDM dort l'amplification présent un pic de gain autour de 1530 nm. La partie du signal à 1530 nm est dérivé alors que le reste du signet WDM est amplifiée dans une seconde partie de la fibre dopée. Une fois traités, les signaux sont recombinées de manière a obtenir un gain plat sur toute la bande 1530-1570 nm.

Le document EP-0 883 218 décrit un amplificateurs optique comprenant une rection commune se divisant en plusieurs branches parallèles et indépendantes, chacune affectée à un domaine de longueur d'onde. Un signal optique arrivant dans la portion commune, dans laquelle il peut être amplifié, est séparé en signaux de domaine de longueur d'onde différents qui sont envoyés respectivement dans les branches où ils peuvent être amplifiés séparément.

I. Yamashita et les autres , Er3+ doped fibre pre-amplifier with subsidiary EDF for ampification in WDM systems using two separate wavelength bands of 1.53 and 1.55µm, Electronics Letters 32(18), 1996, pp.1690-1691, décrivent un amplificateur optique optique comprenant une section commune se divisant en deux branches parallèles, chacune étant destinée aux signaux à 1.53 et 1.55µm respectivement.

L'invention a pour objet l'amplification des signaux en bandes C et L, pour les systèmes de transmission sous-marins ; dans de tels systèmes, la puissance d'entrée des amplificateurs est relativement élevée mais le gain est moyen - l'article précité de M.X. Ma propose une valeur de 7 dBm pour la puissance d'entrée et de 11,7 dB pour le gain.

Plus précisément l'invention propose un amplification optique selon la revendication 1 dans les bondes C et L, présentant un premier étage avec une fibre d'amplification commune aux bandes C et L, un deuxième étage avec une branche pour les signaux de bande C et une branche avec une fibre d'amplification pour les signaux de bande L, dans lequel la majorité de la puissance créée en bande C est créée dans le premier étage d'amplification.

De préférence, le rapport entre la puissance de sortie en mW du premier étage pour les signaux de bande C et la puissance de sortie en mW de l'amplificateur pour les signaux de bande C est supérieur à 0,75.

Avantageusement, le gain de l'anmplificateur pour les signaux en bande C est égal au gain d'amplification des signaux en bande C dans le premier étage d'amplification.

L'amplificateur présente de préférence un gain inférieur à 15 dB.

Dans un mode de réalisation, l'amplificateur présente un coupleur dans la branche pour les signaux de bande C couplant dans le sens contra-propagatif une lumière de pompage pour la fibre d'amplification du premier étage. Cette lumière peut présenter une longueur d'onde comprise entre 1450 et 1500 nm.

On peut encore prévoir un coupleur dans le premier étage couplant une deuxième lumière de pompage pour la fibre d'amplification du premier étage. Cette deuxième lumière de pompage peut présenter une longueur blonde entre 965 et 990 nm.

Dans un autre mode de réalisation, l'amplificateur présente un coupleur dans la branche pour les signaux de bande L couplant une lumière de pompage pour la fibre d'amplification de la dite branche.

Dans ce cas, il est avantageux de prévoir une pompe fournissant une lumière de pompage au coupleur dans la branche pour les signaux de bande C et au coupleur dans la branche pour tes signaux de bande L.

L'invention concerne encore un système de transmission à fibre optique présentant au moins un tel amplificateur.

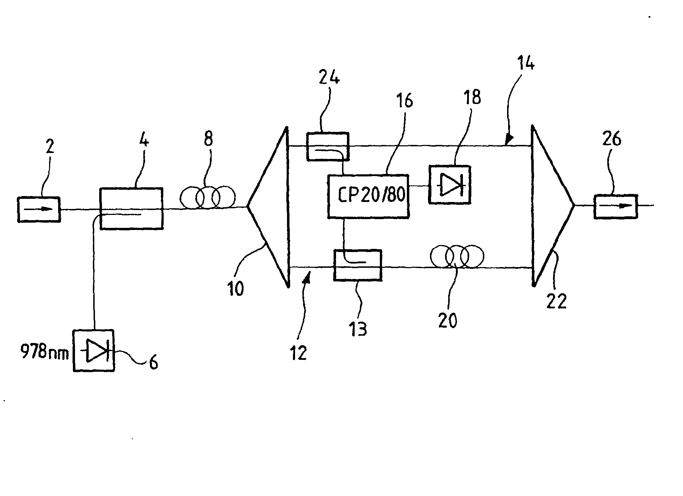

D'autres caractéristiques et avantages de l'invention apparaîtront à la lecture de la description qui suit de modes de réalisation de l'invention, donnés à titre d'exemple et en référence aux dessins annexés, dont la figure unique montre une représentation schématique d'un amplificateur selon l'invention.

L'invention propose un amplificateur en bandes C et L, qui présente deux étages d'amplification : le premier étage est commun aux bandes C et L, et présente une fibre d'amplification dans laquelle les signaux de ces deux bandes sont amplifiés. Le deuxième étage présente une branche pour les signaux de bande C et une branche pour les signaux de bande L. Selon l'invention, la majorité de la puissance créée en bande C dans l'amplificateur est créée dans le premier étage. La branche pour les signaux en bande C du deuxième étage peut donc être plus simple que dans les amplificateurs de l'art antérieurs; dans l'exemple donné plus bas, il n'y a pas d'amplification des signaux dans cette branche.

Pour de tels amplificateurs peut aussi se poser un problème nouveau en bande L; de fait, la longueur de la fibre commune du premier étage d'amplification et la puissance de pompe peuvent être adaptées de sorte à fournir le gain recherché en bande C, ou la majorité de la puissance. Le gain en bande C du premier étage est typiquement de l'ordre de grandeur des pertes sur un tronçon du système de transmission séparant deux amplificateurs; on peut à titre d'indication donner une valeur de 12 dB. Pour une telle valeur de gain, l'amplification en bande L dans le premier étage d'amplification est faible, et vaut quelques dB. Le problème qui se poserait alors est l'augmentation du facteur de bruit dans la bande L, lors de l'amplification des signaux en bande L dans le second étage d'amplification. L'invention propose aussi une solution à ce problème nouveau; elle propose une solution simple et efficace pour réduire le facteur de bruit dans la bande L, sans rendre plus complexe l'amplificateur.

Pour réduire le facteur de bruit en bande L lors de l'amplification des signaux de cette bande dans le second étage d'amplification, l'invention propose dans un mode de réalisation de disposer dans la branche des signaux en bande C du second étage d'amplification le coupleur pour la lumière contra-propagative utilisée pour l'amplification dans la fibre du premier étage. Elle limite ainsi le nombre de dispositifs traversés par les signaux en bande L après amplification dans le premier étage. De ce fait, le rapport signal sur bruit de l'amplificateur est amélioré dans la bande L. L'invention utilise le fait que la lumière de pompage peut traverser un démultiplexeur, en même temps que les signaux en bande C.

La figure est une représentation schématique de l'amplificateur de l'invention. Dans le sens de propagation des signaux, l'amplificateur présente en entrée un isolateur 2, qui est suivi d'un coupleur 4. Le coupleur 4 permet de coupler, dans le sens de propagation des signaux, la lumière d'une pompe 6, qui est constituée d'un laser à 978 nm d'une puissance de 58 mW. En sortie du coupleur 4 est connectée une fibre 8, qui sert pour l'amplification conjointe des signaux en bandes C et L.

On trouve en aval du coupleur 4 un démultiplexeur 10, qui sépare les signaux de la bande C des signaux de la bande L, et les envoie vers deux branches respectives. La branche 12 pour les signaux en bande L contient un coupleur 13 pour coupler dans le sens co-propagatif la lumière provenant d'une pompe 18 à travers un coupleur 16. En sortie du coupleur 13 est connectée une fibre 20 d'amplification en bande L. On trouve en aval de cette fibre un multiplexeur 22, qui combine les signaux de la branche pour les signaux en bande L et de la branche pour les signaux en bande C.

La branche 14 des signaux en bande C contient un coupleur 24, qui couple dans le sens contra-propagatif la lumière provenant de la pompe 18 à travers le coupleur 16. Dans le mode de réalisation représenté, la branche de l'amplificateur pour les signaux en bande C ne contient que ce coupleur.

Est enfin prévu en aval du multiplexeur 22 un isolateur de sortie 26.

Le fonctionnement du dispositif de la figure est le suivant. Les signaux en bandes C et L sont amplifiés dans le premier étage d'amplification, c'est-à-dire dans la fibre commune 8 à l'aide de la lumière co-propagative de la pompe 6 et de la lumière contra-propagative de la pompe 18, qui traverse le multiplexeur 10 pour parvenir dans la fibre 8.

Dans le second étage d'amplification, les signaux de la bande L sont amplifiés dans la fibre 20 à l'aide de la lumière co-propagative de la pompe 18. Dans ce second étage d'amplification, les signaux en bande C ne sont pas amplifiés. En sortie du second étage, les signaux amplifiés de la bande L et les signaux de la bande C sont recombinés.

On peut utiliser pour l'invention les valeurs numériques suivantes. La pompe 6 est une pompe à 978 nm d'une puissance de 70 mW. La fibre 8 d'amplification commune est une fibre dopée à l'erbium d'une longueur de 18 m.

La pompe 18 est une pompe à 1480 nm, d'une puissance de 95 mW. La longueur d'onde de la pompe 18 provenant de la branche pour les signaux de bande C via les coupleurs 16 et 24 traverse donc le multiplexeur pour atteindre le premier étage d'amplification.

Le coupleur 16 est un coupleur 20/80, qui couple une puissance de 18 mW dans la branche pour les signaux en bande C, dans le sens contra-propagatif. Le coupleur 16 couple une puissance de 68 mW dans la branche pour les signaux en bande L, dans le sens co-propagatif. La fibre 20 est une fibre dopée à l'erbium, d'une longueur de 44 m.

Le démultiplexeur 10 est un composant disponible dans le commerce; on peut par exemple utiliser le composant commercialisé par JDS sous la référence WD1516C-AL9564. Ce composant utilise une technologie de filtres interférentiels en couche mince. Ce composant laisse passer la lumière de pompe entre 1450 et 1500 nm depuis la branche pour les signaux en bande C vers le premier étage d'amplification.

Dans une telle configuration, le gain en bande C dans le premier étage d'amplification est suffisant pour atteindre le gain d'amplification nécessaire pour cette bande. On peut atteindre les valeurs de gain de l'ordre de 10 dB à 15 dB, qui sont typiquement nécessaires pour compenser les pertes dans le tronçon précédent du système de transmission. Il n'est donc pas indispensable de prévoir une amplification dans le deuxième étage pour les signaux en bande C.

Dans ce mode de réalisation de l'invention, la puissance créée en bande C dans le premier étage d'amplification est égale à 100% de la puissance créée dans cette bande par l'amplificateur, tandis que la puissance créée dans la branche pour les signaux de bande C du deuxième étage est nulle. La totalité de la puissance créée en bande C est donc créée dans le premier étage d'amplification. On pourrait aussi prévoir une amplification des signaux de la bande C dans la branche pour la bande C du deuxième étage d'amplification. Toutefois, compte tenu du gain total nécessaire, il est possible selon l'invention que la majorité de la puissance en bande C soit créée dans le premier étage. Le rapport des puissances de sortie en mW du premier étage et de l'amplificateur, pour les signaux de bande C, permet facilement de déterminer où la puissance est créée; dans l'exemple donné plus haut, le rapport est voisin de 1. Ce rapport est selon l'invention supérieur à 0,5, voire de préférence supérieur à 0,75; autrement dit, la puissance créée dans l'amplificateur pour les signaux de bande C est majoritairement créée dans le premier étage d'amplification.

L'invention permet de simplifier la structure de l'amplificateur et de limiter le nombre de pompes.

Un autre problème peut se poser, comme expliqué plus haut, du fait que les signaux en bande L dans le premier étage d'amplification ne sont que faiblement amplifiés. Typiquement, pour un gain en bande C de l'ordre de 12 dB, le gain dans la fibre dopée du premier étage d'amplification peut n'être que de 2 ou 3 dB aux longueurs d'ondes les plus élevées de la bande L, pour une fibre du type visé plus haut; la puissance en sortie du premier étage pour les signaux de bande L est de quelques mW. Les faibles valeurs de la puissance de sortie, et les valeurs fortes du gain du deuxième étage peuvent provoquer une détérioration du rapport signal sur bruit en bande L. Afin de limiter cette détérioration, l'invention propose de disposer le coupleur d'injection de la lumière de pompage contra-propagative du premier étage d'amplification dans la branche du second étage d'amplification destinée à la bande C. De la sorte, l'invention permet de limiter les pertes sur les signaux de la bande L après l'amplification dans la fibre commune; les signaux de la bande L, après la fibre d'amplification commune, ne traversent que le démultiplexeur 10 avant de parvenir dans le deuxième étage d'amplification.

Dans la configuration proposée à titre d'exemple, le gain en bande L dans le premier étage d'amplification est de l'ordre de 3,1 dB pour une longueur d'onde de 1595 nm, et la puissance de sortie est de l'ordre de 4 mW pour l'ensemble des canaux de la bande L. Dans le deuxième étage d'amplification, le gain en bande L est de l'ordre de 8,5 dB pour la longueur d'onde de 1595 nm. Le gain total de l'amplificateur, compte tenu des pertes d'insertion des multiplexeurs, est de l'ordre de 11 dB. A titre de comparaison, pour des pertes d'insertion du coupleur 24 de l'ordre de 0,5 dB, le rapport signal sur bruit en bande L est amélioré d'environ 1 dB par rapport à une configuration dans laquelle le coupleur de la lumière contra-propagative est disposé dans le premier étage d'amplification.

La puissance de la lumière de pompe contra-propagative à 1480 nm diminue du fait du passage à travers le multiplexeur 10, par rapport à une configuration dans laquelle le coupleur 24 serait disposé dans le premier étage d'amplification; la perte correspondante est de l'ordre de 0,3 dB, et la pénalité sur la puissance de pompe n'est pas dirimante; elle peut être compensée par une légère augmentation de la puissance de la pompe,

On peut pour réaliser l'invention utiliser les composants optiques connus de l'homme du métier. Ainsi, le terme de "coupleur" est une définition fonctionnelle, et l'on peut utiliser comme coupleur un multiplexeur ou tout autre composant permettant d'injecter la lumière de pompe dans la fibre d'amplification. De la même façon, pour le multiplexeur et le démultiplexeur, on peut utiliser diverses solutions techniques, comme des circulateurs et des réseaux de Bragg. Dans ce cas, le circulateur fait passer les signaux du premier étage d'amplification vers la branche pour les signaux de bande L, et on dispose dans la branche pour les signaux de bande L un réseau de Bragg pour réfléchir les signaux de bande C.

Bien entendu, la présente invention n'est pas limitée aux exemples et modes de réalisation décrits et représentés, mais elle est susceptible de nombreuses variantes accessibles à l'homme de l'art. Ainsi, les isolateurs ne sont pas indispensables au fonctionnement de l'amplificateur. Dans l'exemple de la figure, on a disposé le coupleur pour la lumière contra-propagative de pompage du premier étage dans la branche pour les signaux de bande C du deuxième étage; il reste possible de disposer ce coupleur dans le premier étage, au prix le cas échéant d'une dégradation du rapport signal sur bruit en bande L.

Il est aussi manifeste que les puissances de pompe ou les longueurs d'onde des pompes peuvent varier par rapport aux valeurs proposées à titre d'exemple. La pompe à 978 nm peut plus généralement présenter une longueur d'onde entre 965 et 990 nm. La pompe à 1480 nm peut présenter une longueur d'onde entre 1450 et 1500 nm; une telle longueur d'onde peut traverser le démultiplexeur 10 depuis la branche pour les signaux en bande C, pour atteindre le premier étage d'amplification.

Dans l'exemple, on utilise une pompe unique pour le pompage contra-propagatif du premier étage et pour le pompage co-propagatif du deuxième étage de l'amplificateur, le coupleur 16 servant à répartir la puissance entre les deux directions de pompage; on pourrait aussi utiliser des pompes distinctes. On pourrait encore dans le deuxième étage d'amplification utiliser une lumière contra-propagative pour le pompage de la fibre d'amplification. Cette solution permettrait d'augmenter encore le rapport signal sur bruit, dans la mesure où elle diminue encore le nombre de dispositifs que les signaux en bande L doivent traverser avant d'atteindre la fibre d'amplification du deuxième étage. Enfin, dans l'exemple de la figure, on utilise deux pompes pour le premier étage d'amplification. On pourrait utiliser uniquement une pompe contra-propagative provenant du deuxième étage d'amplification, ou encore utiliser une deuxième pompe contra-propagative.

## Revendications

1. Amplificateur optique dans les bandes C et L, présentant un premier étage avec une fibre d'amplification (8) commune aux bandes C de 1529 nm à 1565 nm et L de 1569 nm à 1603 nm, un deuxième étage avec une branche (14) pour les signaux de bande C et une branche (12) avec une fibre d'amplification (20) pour les signaux de bande L dans lequel, lors de l'utilisation, la majorité ou la totalité de la puissance créée en bande C est créée dans le premier étage d'amplification, **caractérisé par** la présence d'un couple (24) dans la branche pour les signaux de bande C permettant de coupler dans le sens contra-propagatif une lumière de pompage pur la fibre d'amplification du premier étage.

2. Amplification selon la revendication 1, dans lequel, lors de l'utilisation, le rapport entre la puissance de sortie en mW du premier étage pour les signaux de bande C et la puissance de sortie en mW de l'amplificateur pour les sigaux de bande C est supérieur à 0,75.

3. Amplificateur selon l'une des revendication 1 et 2, dans lequel, lors de l'utilisation, le gain de l'amplificateur pour les signaux en bande C est égale au gain d'amplification des signaux en bande C dans le premier étage d'amplification.

4. Amplificateur selon l'une des revendication 1 et 2, présentant, lors de l'utilisation, un gain inférieur à 15 dB.

5. Amplificateur selon l'une des revendication 1 à 4, dans lequel ladite lumière de pompage présente une longueur d'onde comprise entre 1450 nm et 1500 nm.

6. Amplificateur selon l'une des revendications 1 à 5, **caractérisé en ce qu'**il présente un coupleur (4) dans le premier étage permettant de coupler une deuxième lumière de pompage pour fibre d'amplification du premier étage.

7. Amplificateur selon la revendication 6, dans lequel la deuxième lumière de pompage présente une longueur d'onde entre 965 nm et 990 nm.

8. Amplificateur selon l'une des revendications1 à 7, présentant un coupleur (13) dans la branche (12) pour les signaux de bande L permettant de coupler une lumière de pompage pour la fibre d'amplification (20) de ladite branche.

9. Amplificateur selon la revendication 8, présentant une pompe fournissant une lumière de pompage au coupleur (24) dans la branché pour les signaux de bande C et au coupleur (13) dans la branche pour les signaux de bande L.

10. Système de transmission à fibre optique présentant au moins un amplificateur selon l'une des revendications 1 à 9.

## Claims

1. Optical amplifier in the C- and L-bands, having a first stage with an amplification fibre (8) shared by the C-band from 1529 nm to 1565 nm and the L-band from 1569 nm to 1603 nm, a second stage with a branch (14) for the C-band signals and a branch (12) with an amplification fibre (20) for the L-band signals in which, during use, most or all of the power created in the C-band is created in the first amplification stage, **characterised by** the presence of a coupler (24) in the branch for the C-band signals used to couple, in the contra-propagating direction, a pumping light for the amplification fibre of the first stage.

2. Amplifier according to claim 1, in which, during use, the ratio between the output power in mW of the first stage for the C-band signals and the output power in mW of the amplifier for the C-band signals is greater than 0.75.

3. Amplifier according to one of claims 1 and 2, in which, during use, the gain of the amplifier for the C-,band signals is equal to the amplification gain of the C-band signals in the first amplification stage.

4. Amplifier according to one of claims 1 to 3, with a gain:, during use, of less than 15dB.

5. Amplifier according to one of claims 1 to 4, in which said pumping light has a wavelength of between 1450 nm and 1500 nm.

6. Amplifier according to one of claims 1 to 5, **characterised in that** it has a coupler (4) in the first stage, used to couple a second pumping light for the amplification fibre of the first stage.

7. Amplifier according to claim 6, in which the second pumping light has a wavelength of between 965 nm and 990 nm.

8. Amplifier according to one of claims 1 to 7, with a coupler (13) in the branch (12) for the L-band signals, used to couple a pumping light for the amplification fibre (20) of said branch.

9. Amplifier according to claim 8, with a pump providing a pumping light to the coupler (24) in the branch for the C-band signals and to the coupler (13) in the branch for the L-band signals.

10. Optical fibre transmission system with at least one amplifier according to one of claim 1 to 9.

## Patentansprüche

1. Optischer Verstärker im C- und L-Band, wobei der Verstärker eine erste Stufe mit einer für das C-Band von 1529 nm bis 1565 nm und das L-Band von 1569 nm bis 1603 nm gemeinsamen Verstärkungsfaser (8), eine zweite Stufe mit einem Zweig (14) für die C-Band-Signale und einem Zweig (12) mit einer Verstärkungsfaser (20) für die L-Band-Signale aufweist, wobei bei der Benutzung der größte Teil oder die Totalität der im C-Band erzeugten Leistung in eier ersten Verstärkerstufe erzeugt wird, **gekennzeichnet durch** das Vorhandensein eines Kopplers (24) im Zweig für die C-Band-Signale, welcher es ermöglicht, für die Verstärkungsfaser der ersten Stufe ein Pumplicht in der der Ausbreitung entgegengesetzten Richtung zu koppeln

2. Verstärker nach Anspruch 1, wobei bei der Benützung das Verhältnis zwischen der Ausgangsleistung in mW der ersten Stufe für die G-Band-Signale und der Ausgangsleistung in mW des Verstärkers für die C-Band-Signale höher als 0,75 ist.

3. Verstärker nach einem der Ansprüche 1 und 2, wobei bei der Benutzung die Verstärkung des Verstärkers für die C-Band-Signale der Verstärkung der C-Band-Signale in der ersten Verstärkerstufe entspricht.

4. Verstärker nach einem der Ansprüche 1 bis 3, wobei der Verstärker bei der Benutzung eine Verstärkung von weniger als 15 dB aufweist,

5. Verstärker nach einem der Ansprüche 1 bis 4, wobei das besagte Pumplicht eine Wellenlänge zwischen 1450 nm und 1500 nm aufweist.

6. Verstärker nach einem der Ansprüche 1 bis 5, **dadurch gekennzeichnet, dass** er in der ersten Stufe einen Koppler (4) aufweist, weicher es ermöglicht, ein zweites Pumplicht für die Verstärkungsfaser der ersten Stufe zu koppeln.

7. Verstärker nach Anspruch 6, wobei das zweite Pumplicht eine Wellenlänge zwischen 965 nm und 990 nm aufweist.

8. Verstärker nach einem der Ansprüche 1 bis 7, mit einem Koppler (13) im Zweig (12) für die L-Band-Signale, welcher es ermöglicht, ein Pumplicht für die Verstärkungsfaser (20) des besagten Zweigs zu koppeln.

9. Verstärker nach Anspruch 8, mit einer Pumpe, weiche den Koppler (24) in dem Zweig für dieC-Band-Signale und den Koppler (13) in dem Zweig für die L-Band-Signale mit Pumplicht versorgt.

10. Faseroptisches Obetiragungssystem mit mindestens einem Verstärker nach einem der Ansprüche 1 bis 9.
